# EUROPEAN PATENT SPECIFICATION

(11) **EP 2 500 887 B1**
(45) Date of publication and mention of the grant of the patent: **09.09.2020**
(21) Application number: 11158720.0
(22) Date of filing: 17.03.2011
(51) Int. Cl.: G08G 1/0962, G01C 21/32, G06F 16/29

(54) **Description of a Road Segment Using ISO 17572-3**
Beschreibung eines Straßensegments mithilfe von ISO 17572-3
Description d'un segment de route au moyen de la norme ISO 17572-3

(43) Date of publication of application: 19.09.2012
(73) Proprietor: Harman Becker Automotive Systems GmbH, 76307 Karlsbad (DE)
(72) Inventor: Hinz, Ole, 23858, Reinfeld (Holstein) (DE)
(74) Representative: Bertsch, Florian Oliver

(56) References cited:
- DE-A1- 19 858 568
- NA 052-02-71 GA: GEMEINSCHAFTSARBEITSAUSSCHUSS NAAUTOMOBIL/DKE: TELEMATIK: "ISO/DIS 17572: Intelligent transport systems (ITS) - Location referencing for geographic databases - Part 3: Dynamic location references (dynamic profile)", INTERNATIONAL STANDARD - ISO, ZUERICH, CH, vol. ISO/FDIS, no. 17572-3, 1 September 2007 (2007-09-01), pages 1-87, XP008096259,
- VOLKER HIESTERMANN: "Map-independent location matching certified by the AGORA-C standard", TRANSPORTATION RESEARCH. PART C, EMERGING TECHNOLOGIES, PERGAMON, NEW YORK, NY, GB, [Online] vol. 16, no. 3, 1 June 2008 (2008-06-01), pages 307-319, XP002515116, ISSN: 0968-090X, DOI: DOI:10.1016/J.TRC.2007.12.003 Retrieved from the Internet: URL:http://dx.doi.org/10.1016/j.trc.2007.1 2.003> [retrieved on 2009-02-13]
- Thomas Strang ET AL: "Vehicle Networks", , 10 November 2008 (2008-11-10), pages 1-47, XP55002841, Universität Innsbruck Retrieved from the Internet: URL:http://www.sti-innsbruck.at/fileadmin/ documents/vn-ws0809/07-VN-BroadcastSystems .pdf [retrieved on 2011-07-14]

## Description

The present invention relates to a method for providing a description of a road segment using locations of a geographic database, the description of the road segment being output to a user and the road segment being identified in the geographic database on the basis of location reference points allowing a unique identification of said road segment in the geographic database using a dynamic location references technique according to ISO 17572-3, also called DLR-1. The invention furthermore relates to a system generating the description of the road segment and to a receiver receiving traffic messages that outputs the description of the road segment to a user.

### Related Art

Traffic information for vehicles plays an important role for users and navigation systems that determine a route to a predefined destination location. ISO 14819-1 describes a protocol that is designed to provide event-oriented messages for an end user that may be presented to a user. This standard defines the message structure and content and its presentation to the end user. This standard uses RDS-TMC messages broadcast via air to a radio receiver.

In this standard the different locations of traffic events are coded using predefined tables of locations. This way of alerting a user is useful especially in connection with high road classes such as motorways, as a road segment can be easily identified by identifying the two connection points on the motorway between which the traffic problem has occurred. As it is not possible to leave a motorway inbetween the connection points, the road segment between said connection points can be identified uniquely.

If, however, a traffic event occurs on a road class having a very low road class number, e.g. on the least important road in a given network, it might be difficult to use TMC codes as the two locations which could delimit the closed road segment are not included in the location tables used by the TMC messages.

Another approach to identify road segments which can be used for road traffic messages is described in ISO 17572-3:2008, also called DLR-1 or Agora-C. This standard allows to describe a location reference corresponding to objects in geographic databases in a standard unambiguous manner independent of the used geographic databases that might be produced by different vendors of different applications. The latter standard uses a dynamic location references technique in which encoding rules are used to encode a description of a road segment in which a traffic event has occurred. To this end location reference core points are used that provide a minimum specification for a location reference. The location reference core points provide a complete and sufficient set of rules for all locations in traffic telematics. This standard furthermore uses location reference extension points which are extended for referencing destination locations.

### Summary

A need exists to provide a possibility that allows a unique description of a road segment, e.g. for traffic telematic purposes that can be used in connection with all possible road classes.

This need is met by the features of the independent claims. In the dependent claims preferred embodiments of the invention are described.

According to a first aspect of the invention a computer-implemented traffic message encoding and decoding method, the message to be transmitted from a transmitter to a receiver according to claim 1 is provided.

By providing the two first location reference points describing the greater road section in which said road segment is contained and by providing the two second location reference points describing in more detail the road segment within said greater road section, a description is obtained that can be output to a user and which allows the user to understand where the road segment is located. The user is especially able to identify the road segment in smaller roads, as the description contains a description of the greater road section.

The road segment is identified in the geographic database on the basis of location reference core points, wherein the two first and the two second location reference points are location reference extension points which are added to the location reference core points, the location reference extension points being used for the description of the road segment to be output to the user. In this embodiment the location reference extension points which are used in a different purpose in ISO 17572-3 are added to the core points and are used to describe in detail the road segment.

According to the invention, a description of the road segment is generated using the provided description, wherein the road segment is described by describing the greater road section using the two first location reference points and by describing the road segment within the greater road section using the two second location reference points. By adding the four location reference points, i.e. location reference extension points, a part of a road in which a traffic event may have been detected or which may be closed can be described in such a way that a user to which the description is output can understand in which part of the geographic database the traffic event has occurred.

Preferably a textual output of the road segment is generated using the provided description. However, it should be understood that the description of the road segment may be output to the user using a text-to-speech system so that the user can listen to the description of the road segment.

One possibility to uniquely identify the road segment is when the first two location reference points describe geographic objects located on one end and on the other hand of said greater road section, wherein the second two location reference points describe geographic objects that further delimit the road segment of said road. By way of example the first two location reference points can correspond to villages or cities which are connected by the greater road section and where a certain road segment is closed. The first two location reference extension points allow the user to identify the road in general, e.g. the road from village A to village B, the second two location reference extension points describing in further detail which part of the road between village A and village B is closed.

The invention furthermore relates to ; a traffic message encoding system according to claim 3.

The system furthermore comprises a receiver adapted to receive traffic message according to claim 5.

The invention will be described in further detail with reference to the accompanying drawings, in which
Fig. 1 shows an embodiment of a closed road section between two villages,
Fig. 2 shows an embodiment of a closed road section in another geographic situation,
Fig. 3 shows an example of a closed road section in a further geographic situation,
Fig. 4 shows a closed road section in still another geographic situation,
Fig. 5 shows a schematic view of a system generating a description of the road segment and a receiver displaying the description to a user,
Fig. 6 shows a state diagram with different steps for generating and displaying the description of the road section,
Fig. 7 shows a schematic view of the component of the generated message, and
Fig. 8 shows an example of a closed road section between two geographic locations.

### Detailed Description

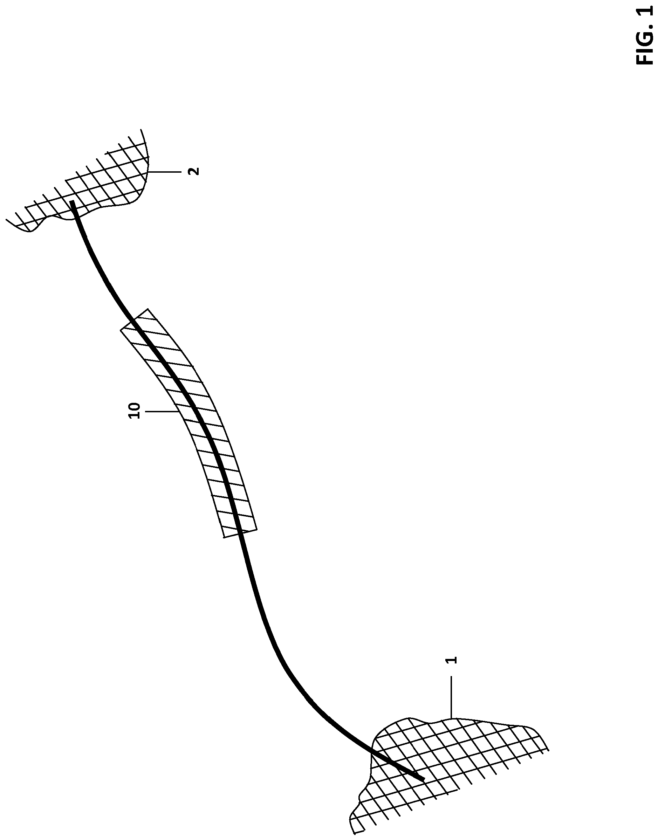

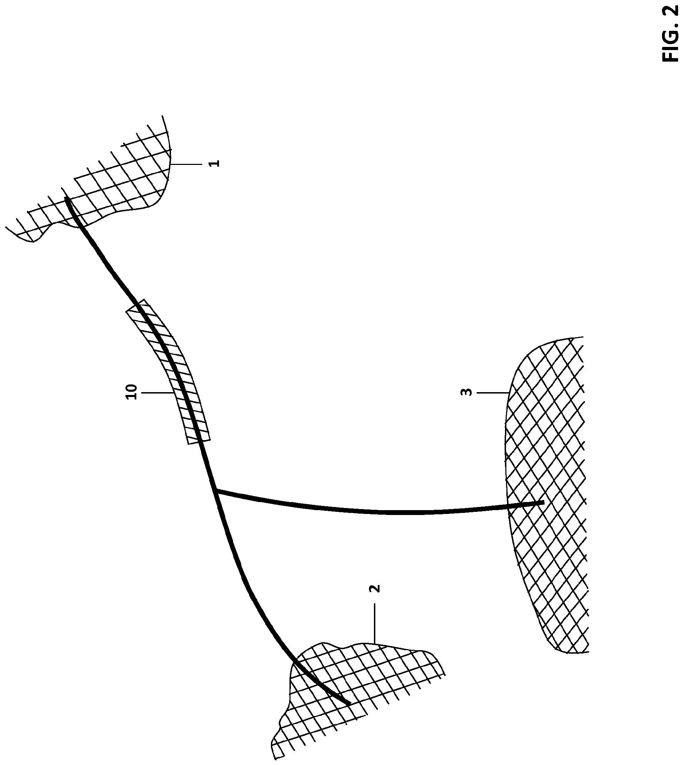

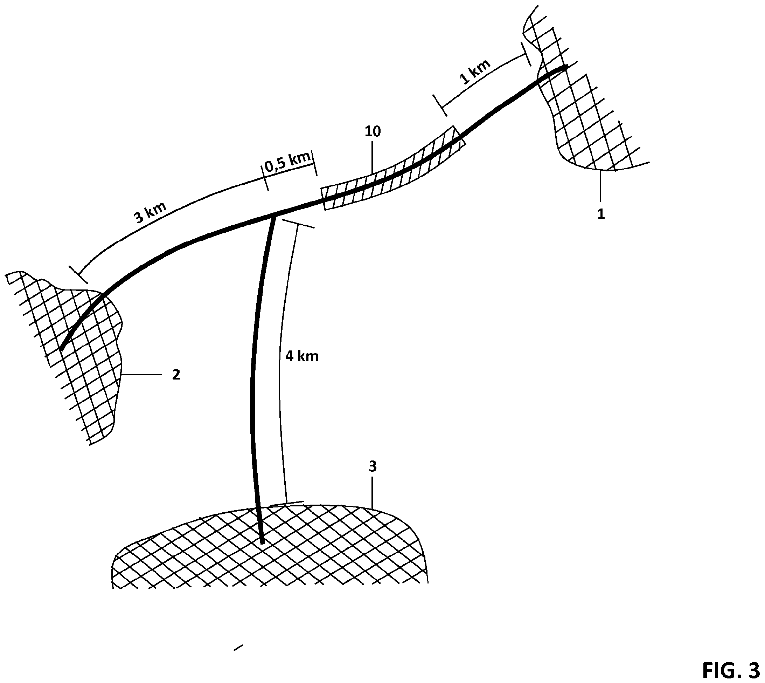

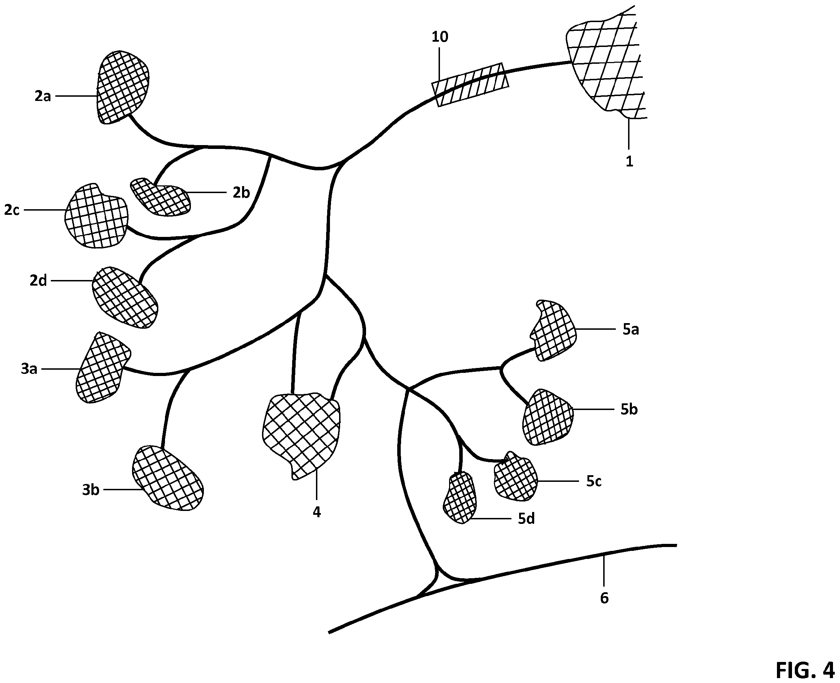

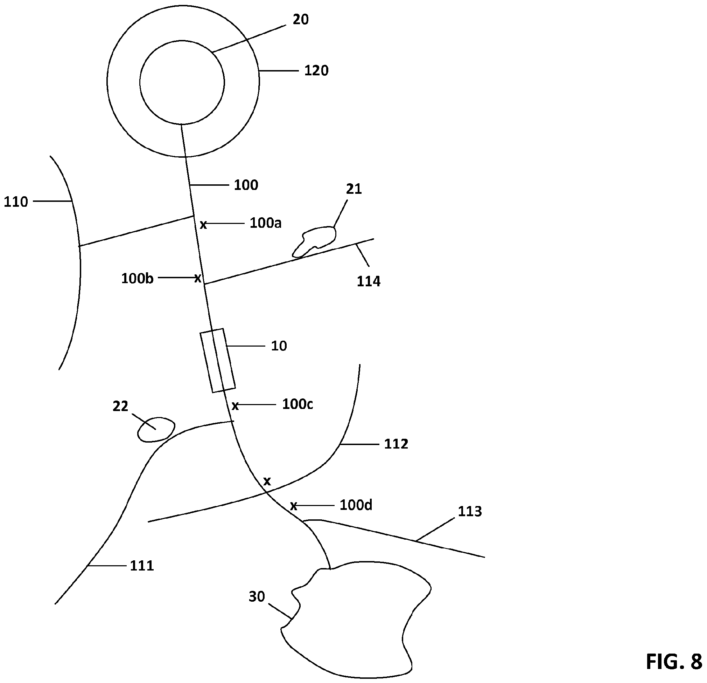

In Fig. 1 an embodiment is shown where a road segment 10 is closed between two villages, the villages 1 and 2. In the embodiment of Fig. 1 the description of the road segment can be obtained easily, even with TMC messages provided that villages 1 and 2 are contained in the location table used by the TMC decoder. As the road between village 1 and village 2 has no junction, the road segment can be identified as a road segment located between villages 1 and 2. In the embodiment shown in Fig. 2 the situation is already more complicated, as it has to be determined whether the road segment can be described as being located between village 1 and village 2 or between village 1 and village 3. If village 2 is closer to the closed section than village 3 (see Fig. 3), then the closed road segment could be described as being located between village 1 and village 2. Another criterion for describing the closed road section could be the number of people living in the two villages 2 or 3. Another criterion could be the name of the road. If the road between village 1 and 3 is named, e.g. L123, whereas the part of the road between village 2 and the junction has a different name, then the road segment could be described as lying between villages 1 and 3. However, in the embodiment shown in Fig. 4 the situation becomes more and more complicated, as the road segment cannot be described by simply using village 1 or one of the villages 2a-2d, 3a, 3b, 4 or 4a-d. From the examples disclosed in connection with Fig. 1 to 4 it can be concluded that the description of a road segment using only two geographic locations located in the neighbourhood of the closed road segment does not provide a satisfying solution in all situations. A description of a road segment only describing two villages located along a road including said road segment may not be enough to allow a user to identify the closed road segment. According to the present invention the solution is now to use the location reference extension points in addition to the core points to describe a closed road segment. This is explained in more detail with reference to the example shown in Fig. 8.

In the example of Fig. 8 the road segment 10 may be closed or a traffic congestion may exist in road segment 10. The road 100 at which the closed road section is located is located between a first city or urban agglomeration 20 and a second urban agglomeration 30. The urban agglomerations 20 and 30 may also be smaller villages and the road 100 can be of any road category. The road 100 represented in a geographic database may be described using location reference core points which are shown in Fig. 8 with reference numerals 100a-100d. The location reference core points provide location information that may be used by a navigation system to calculate a route to a predetermined destination or may be used for displaying map data of the geographic database. When a navigation system receives the traffic information including the core points 100b and 100c, the system can internally unambiguously identify the road segment where the problem occurs. However, these core points are not appropriate for a description output to a user as the user may not be able to interpret and correctly understand the information provided by the two core points 100b and 100c.

Referring back to Fig. 8 the displayed map shows, in addition to road 100, other roads, such as the circle road 120 around city 20 or roads 110-114. According to an embodiment of the invention the closed road segment can now be described by determining two location points describing a greater road section including the road segment 100. In the embodiment shown these two locations are the cities 20 and 30, as these two cities 20 and 30 delimit road 100. Within said greater road section the road segment can be described in further detail as lying between the two geographic objects 21 and 22. These objects can be villages or urban agglomerations, points of interest, etc. As a consequence, the road segment 10 is specified as lying on the road between locations 20 and 30, whereas the closed part is located between locations 21 and 22. According to the present invention these four location points are used for the description of the road segment output to the user by adding these four location points as location reference extension points to the message containing the location reference core points 100b and 100c.

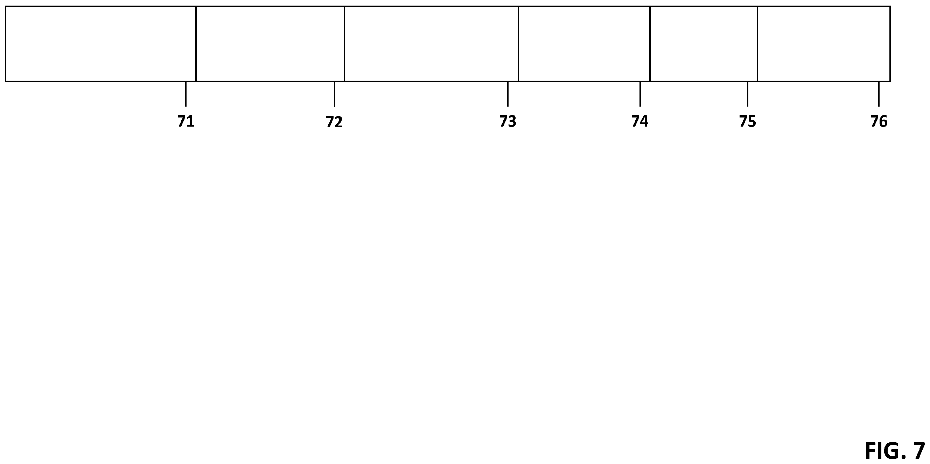

Fig. 7 shows a schematic view of a traffic message coded using ISO 17572-3. The message contains a first field 71 and a second field 72 including the location reference core points. The core points are encoded in the fields 71 and 72 using the encoding rules specified in further detail in ISO 17572-3. Furthermore, the traffic message contains four fields 73-76, each field including a location reference extension point describing the closed road section as mentioned above in connection with Fig. 8. The location reference extension points 20 and 30 are the first two location reference points describing the greater road section including the road segment, the second two location reference extension points located in field 75 and 76 describing in more detail the location of the closed road segment between villages 21 and 22. The four location reference extension points need not necessarily be contained in the message in the order mentioned above. They can be provided in the message using any order, as long as a predefined order is used which are known to the system generating the message and the system receiving and decoding the message.

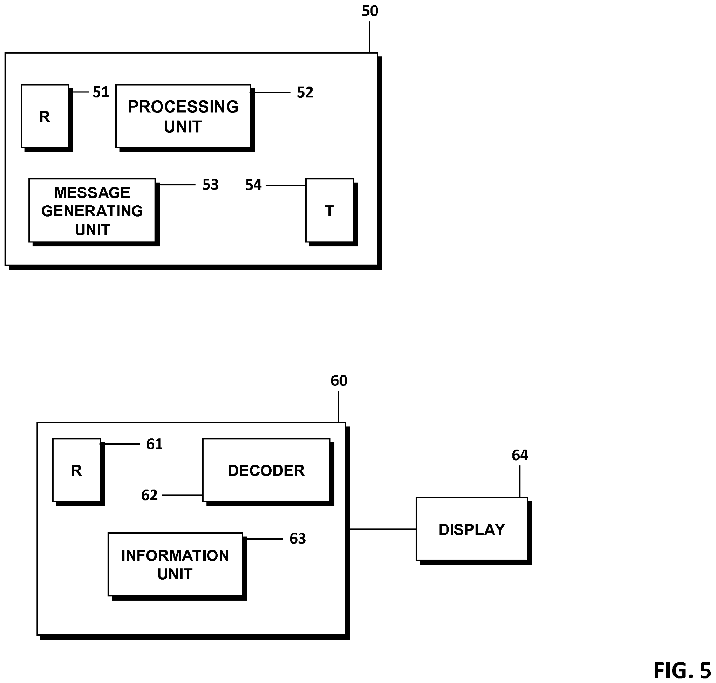

In Fig. 5 the different components involved in displaying a message of a road segment are discussed in more detail. A system 50 generates the description of the road segment based on traffic information provided by a traffic provider and received via receiver 51. The system furthermore comprises a processing unit 52 that is configured to determine the two first location reference extension points and the two second location reference extension points needed to describe in more detail a road segment where a traffic event has been detected. The processing unit uses known algorithms, such as the Dijkstra or A* algorithm to determine the first two location reference extension points based on the location reference core points included in the traffic event, the extension points describing the first end and the second end of the road including the road segment to which the traffic event refers. The processing unit 52 is further configured to determine the two second location reference extension points, e.g. the points 21 and 22 in the example of Fig. 8. Once the processing unit has determined the four locations, a message generating unit 53 generates a traffic message using encoding rules known from ISO 17572-3.

The four locations, e.g. locations, 20, 30 and 21 and 22 are added to the message as location reference extension points. The generated message can then be transmitted by a transmitter 54, e.g. may be broadcast in a radio channel. Furthermore, a receiver 60 is shown which may be part of a navigation system incorporated in a vehicle or which may be simply a radio receiver. The receiver comprises a receiving unit 61 configured to receive the broadcast traffic message including the description of the closed road segment. The receiver furthermore contains a decoder 62 where the message generated by system 50 is decoded. An information unit 63 generates the description of the closed road segment, the information unit being configured to correctly identify the first two location reference extension points as the locations generally describing on which road the closed section is located, the information unit being further configured to identify the two second location reference extension points describing in more detail at which part of the road the closed road segment is located. By way of example the information unit may generate a message that a road segment of a road between cities 20 and 30 is closed, the segment being located more precisely between villages 21 and 22. The four extended points may be determined by simply locating them at the center of the locations 20, 30 and 21 and 22. The description may then be output on a display 64 to a user.

In connection with Fig. 5 only the components necessary for the understanding of the present invention were described in detail, other components being omitted for the sake of clarity. Furthermore, the different elements shown in system 50 and the receiver 60 are shown as separate entities. It should be understood that the discussed functions may be incorporated in other modules contained in system 50 or receiver 60. Furthermore, the different functions shown may be incorporated by hardware or software or as a combination of hardware and software.

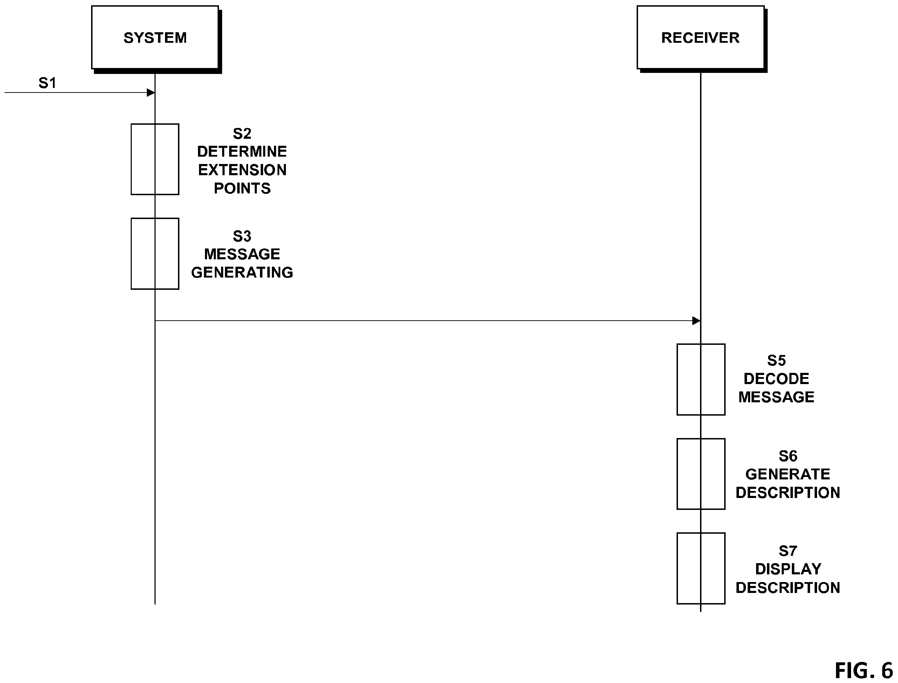

In Fig. 6 the different steps for generating the description are summarized. A data service provider may generate the traffic information that is received by the system 50 in step S1. The traffic information provided allows the determination of the two location reference core points with which the road segment can be unambiguously determined. In step S2 the system determines the four extension points using the two core points allowing to unambiguously describe the closed road section that can be understood by a user. In step S3 the traffic message is generated including the four location reference extension points. When the message has been generated, it may be broadcast in step S4. The message can then be received by the receiver and can be decoded in step S5. In step S6 the message is generated by extracting the two first location reference extension points describing the greater road section. Furthermore, the two second location reference extension points are extracted describing in more detail the geographic objects limiting and describing in more detail the road segment. In step S7 the description can then be displayed to the user. With the displayed information the user is informed about the closed road segment.

## Claims

1. A computer-implemented traffic message encoding and decoding method, the message to be transmitted from a transmitter to a receiver, providing a description of a road segment (10) using locations stored in a geographic database, the description of the road segment (10) being output to a user, the road segment (10) being identified in the geographic database on the basis of location reference core points (100a-100d) allowing a unique identification of said road segment (10) in the geographic database using a Dynamic Location references technique according to ISO 17572-3, the method comprising the steps of:
- encoding and decoding two first location reference points (20, 30) with which a greater road section (100) including said road segment is described, wherein one of the two first location reference points (20, 30) corresponds to a geographic object located at a first end of said greater road section and the other of the two first location reference points corresponds to a geographic object located at a second end of said greater road section (100),
- and two second location reference points (21, 22) with which the road segment within said greater road section is described in more detail, wherein one of the two second location reference points (21, 22) corresponds to a geographic object located at a first end of said road segment and the other of the two second location reference points (21, 22) corresponds to a geographic object located at a second end of said road segment, the road segment (10) being described using the first two location reference points (20, 30) and the second two location reference points (21, 22),
wherein the two first and two second location reference points (20, 30, 21, 22) are location reference extension points which are added to the location reference core points and which are used for the description of the road segment (10) to be output to a user, wherein the described road segment (10) is a road segment where a traffic event has occurred the description of the road segment being used to inform the user about the traffic event on said road segment.

2. The method according to claim 1, wherein the provided description is used to generate a textual output of the road segment for the user.

3. A traffic message encoding system (50) generating a description of a road segment (10) using locations stored in a geographic database, the description of the road segment being output to a user, the road segment (10) being identified in the geographic database on the basis of location reference core points allowing a unique identification of said road segment in the geographic database 1 using a Dynamic Location references technique according to ISO 17572-3, the system comprising:
- a receiver (51) receiving information about the road segment (10),
- a processing unit (52) configured to determine, from the received information, two first location reference points (20, 30) with which a greater road section (100) including said road segment (10) is described, wherein one of the two first location reference points corresponds to a geographic object located at a first end of said greater road section and the other of the two first location reference points corresponds to a geographic object located at a second end of said greater road section (100), the processing unit (52) being further configured to determine two second location reference points (21, 22) with which the road segment within said greater road section is described in more detail, wherein one of the two second location reference points corresponds to a geographic object located at a first end of said road segment and the other of the two second location reference points corresponds to a geographic object located at a second end of said road segment,
wherein the two first and two second location reference points (20, 30, 21, 22) are location reference extension points which are added to the location reference core points and which are used for the description of the road segment (10) to be output to a user, and
- a message generating unit (53) generating the description of said road segment (10) to be output to a user, the description containing the two first location reference points (20, 30) and the two second location reference points (21, 22).

4. The system according to claim 3, wherein the geographic objects are villages.

5. A receiver (60) receiving a traffic message including information about a traffic event on a road segment (10) that is identified in a geographic database on the basis of location reference core points allowing a unique identification of said road segment in the geographic database using Dynamic Location References technique according to ISO 17572-3, the receiver comprising
- a receiving unit (61) receiving a message containing two first location reference points (20, 30) with which a greater road section (100) including said road segment (10) is described, wherein one of the two first location reference points corresponds to a geographic object located at a first end of said greater road section and the other of the two first location reference points corresponds to a geographic object located at a second end of said greater road section (100), the message further containing two second location reference points (21, 22) with which the road segment (10) within said greater road section is described in more detail, wherein one of the two second location reference points corresponds to a geographic object located at a first end of said road segment and the other of the two second location reference points corresponds to a geographic object located at a second end of said road segment, wherein the two first and two second location reference points (20, 30, 21, 22) are location reference extension points which are added to the location reference core points and which are used for the description of the road segment (10) to be output to a user,
- a decoder (62) decoding the received message and extracting the first and second location reference points,
- an information generating unit (63) configured to generate the description output to a user of the receiver and informing the user about the traffic event on said road segment (10), the road segment being described using the first two location reference points (20, 30) and the second two location reference points (21, 22).

## Patentansprüche

1. Computerimplementiertes Codierungs- und Decodierungsverfahren von Verkehrsnachrichten, wobei die Nachricht von einem Sender zu einem Empfänger übertragen wird, wobei eine Beschreibung eines Straßensegments (10) unter Verwendung von in einer Datenbank gespeicherten Positionen bereitgestellt wird, wobei die Beschreibung des Straßensegments (10) an einen Benutzer ausgegeben wird, wobei das Straßensegment (10) in der geografischen Datenbank auf Grundlage der Positionsreferenzkernpunkte (100a-100d) identifiziert wird, die eine eindeutige Identifizierung des Straßensegments (10) in der geografischen Datenbank unter Verwendung einer dynamischen Positionsreferenztechnik gemäß ISO 17572-3 ermöglichen, wobei das Verfahren die folgenden Schritte umfasst:
- Codieren und Decodieren von zwei ersten Positionsreferenzpunkten (20, 30), mit denen ein größerer Straßenabschnitt (100), der das Straßensegment beinhaltet, beschrieben wird, wobei einer der beiden ersten Positionsreferenzpunkte (20, 30) einem geografischen Objekt entspricht, das sich an einem ersten Ende des größeren Straßenabschnitts befindet, und der andere der beiden ersten Positionsreferenzpunkte einem geografischen Objekt entspricht, das sich an einem zweiten Ende des größeren Straßenabschnitts (100) befindet,
- und von zwei zweiten Positionsreferenzpunkten (21, 22), mit denen das Straßensegment innerhalb des größeren Straßenabschnitts ausführlicher beschrieben wird, wobei einer der beiden zweiten Positionsreferenzpunkte (21, 22) einem geografischen Objekt entspricht, das sich an einem ersten Ende des Straßensegments befindet, und der andere der beiden zweiten Positionsreferenzpunkte (21, 22) einem geografischen Objekt entspricht, das sich an einem zweiten Ende des Straßensegments befindet, wobei das Straßensegment (10) unter Verwendung der ersten beiden Positionsreferenzpunkte (20, 30) und der zweiten beiden Positionsreferenzpunkte (21, 22) beschrieben wird, wobei die beiden ersten und beiden zweiten Positionsreferenzpunkte (20, 30, 21, 22) Positionsreferenzerweiterungspunkte sind, die zu den Positionsreferenzkernpunkten hinzugefügt werden und die für die Beschreibung des Straßensegments (10), das an einen Benutzer auszugeben ist, verwendet werden, wobei das beschriebene Straßensegment (10) ein Straßensegment ist, bei dem ein Verkehrsereignis aufgetreten ist, wobei die Beschreibung des Straßensegments verwendet wird, um den Benutzer über das Verkehrsereignis auf dem Straßensegment zu informieren.

2. Verfahren nach Anspruch 1, wobei die bereitgestellte Beschreibung verwendet wird, um eine Textausgabe des Straßensegments für den Benutzer zu erzeugen.

3. Codierungssystem (50) für Verkehrsnachrichten, welches eine Beschreibung eines Straßensegments (10) unter Verwendung von in einer geografischen Datenbank gespeicherten Positionen erzeugt, wobei die Beschreibung des Straßensegments an einen Benutzer ausgegeben wird, wobei das Straßensegment (10) in der geografischen Datenbank auf Grundlage der Positionsreferenzkernpunkte identifiziert wird, die eine eindeutige Identifizierung des Straßensegments in der geografischen Datenbank unter Verwendung einer dynamischen Positionsreferenztechnik gemäß ISO 17572-3 ermöglichen, wobei das System Folgendes umfasst:
- einen Empfänger (51), der Informationen über das Straßensegment (10) empfängt,
- eine Verarbeitungseinheit (52), die dazu konfiguriert ist, anhand der empfangenen Informationen zwei erste Positionsreferenzpunkte (20, 30) zu bestimmen, mit denen ein größerer Straßenabschnitt (100), der das Straßensegment (10) beinhaltet, beschrieben wird, wobei einer der beiden ersten Positionsreferenzpunkte einem geografischen Objekt entspricht, das sich an einem ersten Ende des größeren Straßenabschnitts befindet, und der andere der beiden ersten Positionsreferenzpunkte einem geografischen Objekt entspricht, das sich an einem zweiten Ende des größeren Straßenabschnitts (100) befindet, wobei die Verarbeitungseinheit (52) ferner dazu konfiguriert ist, zwei zweite Positionsreferenzpunkte (21, 22) zu bestimmen, mit denen das Straßensegment innerhalb des größeren Straßenabschnitts ausführlicher beschrieben wird, wobei einer der beiden zweiten Positionsreferenzpunkte einem geografischen Objekt entspricht, das sich an einem ersten Ende des Straßensegments befindet, und der andere der beiden zweiten Positionsreferenzpunkte einem geografischen Objekt entspricht, das sich an einem zweiten Ende des Straßensegments befindet, wobei die beiden ersten und beiden zweiten Positionsreferenzpunkte (20, 30, 21, 22) Positionsreferenzerweiterungspunkte sind, die zu den Positionsreferenzkernpunkten hinzugefügt werden und die für die Beschreibung des Straßensegments (10), die an einen Benutzer auszugeben ist, verwendet werden, und
- eine Nachrichtenerzeugungseinheit (53), welche die Beschreibung des Straßensegments (10), die an einen Benutzer auszugeben ist, erzeugt, wobei die Beschreibung die beiden ersten Positionsreferenzpunkte (20, 30) und die beiden zweiten Positionsreferenzpunkte (21, 22) enthält.

4. System nach Anspruch 3, wobei die geografischen Objekte Ortschaften sind.

5. Empfänger (60), der eine Verkehrsnachricht empfängt, die Informationen über ein Verkehrsereignis auf einem Straßensegment (10) beinhaltet, das in einer geografischen Datenbank auf Grundlage der Positionsreferenzkernpunkte identifiziert wird, die eine eindeutige Identifizierung des Straßensegments in der geografischen Datenbank unter Verwendung einer dynamischen Positionsreferenztechnik gemäß ISO 17572-3 ermöglichen, wobei der Empfänger Folgendes umfasst:
- eine Empfangseinheit (61), die eine Nachricht empfängt, die zwei erste Positionsreferenzpunkte (20, 30) enthält, mit denen ein größerer Straßenabschnitt (100), der das Straßensegment (10) beinhaltet, beschrieben wird, wobei einer der beiden ersten Positionsreferenzpunkte einem geografischen Objekt entspricht, das sich an einem ersten Ende des größeren Straßenabschnitts befindet, und der andere der beiden ersten Positionsreferenzpunkte einem geografischen Objekt entspricht, das sich an einem zweiten Ende des größeren Straßenabschnitts (100) befindet, wobei die Nachricht ferner zwei zweite Positionsreferenzpunkte (21, 22) enthält, mit denen das Straßensegment (10) innerhalb des größeren Straßenabschnitts ausführlicher beschrieben wird, wobei einer der beiden zweiten Positionsreferenzpunkte einem geografischen Objekt entspricht, das sich an einem ersten Ende des Straßensegments befindet, und der andere der beiden zweiten Positionsreferenzpunkte einem geografischen Objekt entspricht, das sich an einem zweiten Ende des Straßensegments befindet, wobei die beiden ersten und beiden zweiten Positionsreferenzpunkte (20, 30, 21, 22) Positionsreferenzerweiterungspunkte sind, die zu den Positionsreferenzkernpunkten hinzugefügt werden und die für die Beschreibung des Straßensegments (10), die an einen Benutzer auszugeben ist, verwendet werden,
- einen Decodierer (62), der die empfangene Nachricht decodiert und die ersten und zweiten Positionsreferenzpunkte extrahiert,
- eine Informationserzeugungseinheit (63), die dazu konfiguriert ist, die Beschreibung, die an einen Benutzer des Empfängers auszugeben ist und den Benutzer über das Verkehrsereignis auf dem Straßensegment (10) informiert, zu erzeugen, wobei das Straßensegment unter Verwendung der ersten beiden Positionsreferenzpunkte (20, 30) und der zweiten beiden Positionsreferenzpunkte (21, 22) beschrieben wird.

## Revendications

1. Procédé de codage et de décodage de message de trafic mis en œuvre par ordinateur, le message devant être émis d'un émetteur vers un récepteur, fournissant une description d'un segment de route (10) au moyen de localisations stockées dans une base de données géographique, la description du segment de route (10) étant délivrée en sortie à un utilisateur, le segment de route (10) étant identifié dans la base de données géographique sur la base de points centraux de référence de localisation (100a-100d) permettant une identification unique dudit segment de route (10) dans la base de données géographique au moyen d'une technique de références de localisation dynamiques selon ISO 17572-3, le procédé comprenant les étapes de :
- codage et décodage de deux premiers points de référence de localisation (20, 30) avec lesquels est décrite une section de route plus grande (100) incluant ledit segment de route, dans lequel l'un des deux premiers points de référence de localisation (20, 30) correspond à un objet géographique situé à une première extrémité de ladite section de route plus grande et l'autre des deux points de référence de localisation correspond à un objet géographique situé à une seconde extrémité de ladite section de route plus grande (100),
- et deux seconds points de référence de localisation (21, 22) avec lesquels le segment de route à l'intérieur de ladite section de route plus grande est décrit dans de plus amples détails, dans lequel l'un des deux seconds points de référence de localisation (21, 22) correspond à un objet géographique situé à une première extrémité dudit segment de route et l'autre des deux seconds points de référence de localisation (21, 22) correspond à un objet géographique situé à une seconde extrémité dudit segment de route, le segment de route (10) étant décrit au moyen des deux premiers points de référence de localisation (20, 30) et des deux seconds points de référence de localisation (21, 22),
dans lequel les deux premiers et deux seconds points de référence de localisation (20, 30, 21, 22) sont des points d'extension de référence de localisation qui sont ajoutés aux points centraux de référence de localisation et qui sont utilisés pour la description du segment de route (10) devant être délivrée en sortie à un utilisateur, dans lequel le segment de route (10) décrit est un segment de route où un événement de trafic s'est produit, la description du segment de route étant utilisée pour informer l'utilisateur à propos de l'événement de trafic sur ledit segment de route.

2. Procédé selon la revendication 1, dans lequel la description fournie est utilisée pour générer une sortie textuelle du segment de route à destination de l'utilisateur.

3. Système de codage de message de trafic (50) générant une description d'un segment de route (10) au moyen de localisations stockées dans une base de données géographique, la description du segment de route étant délivrée en sortie à un utilisateur, le segment de route (10) étant identifié dans la base de données géographique sur la base de points centraux de référence de localisation permettant une identification unique dudit segment de route dans la base de données géographique au moyen d'une technique de références de localisation dynamiques selon ISO 17572-3, le système comprenant :
- un récepteur (51) recevant des informations à propos du segment de route (10),
- une unité de traitement (52) configurée pour déterminer, à partir des informations reçues, deux premiers points de référence de localisation (20, 30) avec lesquels est décrite une section de route plus grande (100) incluant ledit segment de route (10), dans lequel l'un des deux premiers points de référence de localisation correspond à un objet géographique situé à une première extrémité de ladite section de route plus grande et l'autre des deux points de référence de localisation correspond à un objet géographique situé à une seconde extrémité de ladite section de route plus grande (100), l'unité de traitement (52) étant en outre configurée pour déterminer deux seconds points de référence de localisation (21, 22) avec lesquels le segment de route à l'intérieur de ladite section de route plus grande est décrit dans de plus amples détails, dans lequel l'un des deux seconds points de référence de localisation correspond à un objet géographique situé au niveau d'une première extrémité dudit segment de route et l'autre des deux seconds points de référence de localisation correspond à un objet géographique situé à une seconde extrémité dudit segment de route,
dans lequel les deux premiers et deux seconds points de référence de localisation (20, 30, 21, 22) sont des points d'extension de référence de localisation qui sont ajoutés aux points centraux de référence de localisation et qui sont utilisés pour la description du segment de route (10) devant être délivrée en sortie à un utilisateur, et
- une unité de génération de message (53) générant la description dudit segment de route (10) devant être délivrée en sortie à un utilisateur, la description contenant les deux premiers points de référence de localisation (20, 30) et les deux seconds points de référence de localisation (21, 22).

4. Système selon la revendication 3, dans lequel les objets géographiques sont des villages.

5. Récepteur (60) recevant un message de trafic incluant des informations à propos d'un événement de trafic sur un segment de route (10) qui est identifié dans une se données géographique sur la base de points centraux de référence de localisation permettant une identification unique dudit segment de route dans la base de données géographique au moyen de la technique de références de localisation dynamiques selon ISO 17572-3, le récepteur comprenant
- une unité de réception (61) recevant un message contenant deux premiers points de référence de localisation (20, 30) avec lesquels est décrite une section de route plus grande (100) incluant ledit segment de route (10), dans lequel l'un des deux premiers points de référence de localisation correspond à un objet géographique situé à une première extrémité de ladite section de route plus grande et l'autre des deux premiers points de référence de localisation correspond à un objet géographique situé au niveau d'une seconde extrémité de ladite section de route plus grande (100), le message contenant en outre deux seconds point de référence de localisation (21, 22) avec lesquels le segment de route (10) à l'intérieur de ladite section de route plus grande est décrit dans de plus amples détails, dans lequel l'un des deux seconds points de référence de localisation correspond à un objet géographique situé à une première extrémité dudit segment de route et l'autre des deux seconds points de référence de localisation correspond à un objet géographique situé à une seconde extrémité dudit segment de route, dans lequel les deux premiers et deux seconds points de référence de localisation (20, 30, 21, 22) sont des points d'extension de référence de localisation qui sont ajoutés aux points centraux de référence de localisation et qui sont utilisés pour la description du segment de route (10) devant être délivrée en sortie à un utilisateur,
- un décodeur (62) décodant le message reçu et extrayant les premier et second points de référence de localisation,
- une unité de génération d'informations (63) configurée pour générer la sortie de description à destination d'un utilisateur du récepteur et informer l'utilisateur à propos de l'événement de trafic sur ledit segment de route (10), le segment de route étant décrit au moyen des deux premiers points de référence de localisation (20, 30) et des deux seconds points de référence de localisation (21, 22).
